# EUROPÄISCHE PATENTSCHRIFT

(11) **EP 1 818 585 B1**
(45) Veröffentlichungstag und Bekanntmachung des Hinweises auf die Patenterteilung: **11.03.2009**
(21) Anmeldenummer: 07002042.5
(22) Anmeldetag: 31.01.2007
(51) Int. Cl.: F16K 31/08

(54) **Rückschlagventil**
Non-return valve
Clapet anti-retour

(30) Priorität: 09.02.2006 DE 102006006627
(43) Veröffentlichungstag der Anmeldung: 15.08.2007
(73) Patentinhaber: IAV GmbH Ingenieurgesellschaft Auto und Verkehr, 10587 Berlin (DE)
(72) Erfinder: Conze, Marc, 38547 Calberlah (DE)
(74) Vertreter: Buss, Fritz Gerd

(56) Entgegenhaltungen:
- WO-A-98/57082
- DE-A1- 10 011 674
- GB-A- 744 858
- GB-A- 1 351 196
- US-A- 6 000 417

## Beschreibung

### Technisches Gebiet

Die Erfindung betrifft ein Rückschlagventil für ein Medium mit einem Dichtsitz, mit welchem ein Dichtorgan zusammenwirkt.

### Stand der Technik

Aus der DE 100 11 674 A1 ist ein Richtungsventil mit einer Auslöseschwelle bekannt. Das Richtungsventil weist einen gestuften Kanal auf, der im Eingang eine in die stromaufwärtige Kammer mündende stromaufwärtige Durchführung mit kleinem Querschnitt und eine in die stromabwärtige Kammer mündende Durchführung mit einem großen Durchmesser aufweist. Die beiden in ihrem Durchmesser verschiedenen Durchführungen bilden unter sich einen Absatz, in den die stromaufwärtige Durchführung mündet und dort einen Ventilsitz realisiert, mit dem ein Verschlussorgan zusammenwirkt. Eine in ihrem Querschnitt verminderte Durchführung verbindet das Innere des Ventils stromaufwärtig des Sitzes mit der stromabwärtigen Kammer. Das Verschlussorgan ist magnetisch, und ein Magnet ist in Höhe des Ventilsitzes angeordnet, um das Verschlussorgan an den Ventilsitz zu ziehen.

Aus der US 6,000,417 A ist ein Ventil zur Kontrolle eines Fluidstroms bekannt. Das Ventil umfasst einen Ventilkörper mit einem Hohlraum, eine Einlassöffnung an einer stromaufwärtigen Seite des Ventilkörpers, eine Auslassöffnung an einer stromabwärtigen Seite des Ventilkörpers und ein bewegliches Element, das in dem Hohlraum des Ventilkörpers angeordnet ist. Ein abnehmbarer Magnet ist außerhalb des Ventilkörpers an dessen stromaufwärtigen Seite angeordnet. Dadurch wird das Element gegen ein stromaufwärtiges Ende des Hohlraums gespannt, um bei einer Überwindung einer Vorspannkraft des Fluids an der Einlassöffnung das Fluid von der Einlassöffnung zu der Auslassöffnung fließen zu lassen, und bei einem geringeren Fluiddruck am Einlass im Vergleich zu der Vorspannkraft wird der Fluidfluss verhindert.

Aus der WO 98/57082 A ist ein Ventil, welches bei Druck geöffnet und magnetisch geschlossen wird, bekannt. Das Ventil umfasst ein permanentmagnetisches Element und ein ferromagnetisches Element, wobei eines der Elemente starr in einer Kammer zwischen einem Einlass und einem Dichtungsring angeordnet und das andere Element Teil eines Dichtungskörpers ist.

Aus der GB 744858 A ist ein Ventil mit einem magnetischen Dichtungselement und einem Dichtungssitz bekannt. Angrenzend an den Dichtungssitz können ein oder mehrere Magnete angeordnet sein.

### Aufgabe der Erfindung

Der Erfindung liegt die Aufgabe zugrunde, ein Rückschlagventil bereitzustellen, welches eine nicht lineare Steuerung von Medienströmen in hydraulischen Systemen auch bei schwachen Volumenströmen gewährleistet.

### Lösung der Aufgabe

Die Aufgabe wird durch ein Rückschlagventil gemäß Anspruch 1 gelöst.

### Vorteile der Erfindung

Ein Vorteil der Erfindung ist, dass eine optimale Materialwahl des Dichtsitzes und des Dichtorgans erfolgen kann, da das magnetisierbare (ferromagnetische) Element, welches beabstandet / getrennt vom Dichtsitz ist und diesen zumindest teilweise umfasst, und der Magnet von dem Dichtsitz bzw. dem Dichtorgan getrennt sind. Weder Dichtsitz noch Dichtorgan müssen aus einem magnetischen Material gefertigt werden.

Ein weiterer Vorteil der Erfindung ist, dass die Anordnung des Magneten an dem Führungselement derart gewählt werden kann, dass keine Beeinträchtigung des Mediumflusses auftritt.

Ein anderer Vorteil der Erfindung ist, dass Rückschlagventile ohne zusätzlichen Magnet, mittels dem erfindungsgemäßen, magnetisierbaren Element, beispielsweise einer Metallscheibe, die zwischen der Innenfläche des Ventilgehäuses und dem Dichtsitz anbringbar ist, und mindestens einem Magneten, der an dem Führungselement anbringbar ist, zu Rückschlagventilen mit einer nicht linearen Öffnungskennlinie zur Steuerung der Medienströme kostengünstig und ohne großen Aufwand umrüstbar sind.

In einer vorteilhaften Ausführungsform der Erfindung ist das magnetisierbare Element und / oder der Magnet gegenüber dem Medium abgekapselt. Dies bietet den Vorteil, dass die Magnetkraft durch etwaige Ablagerungen oder Schädigungen des Mediums nicht beeinträchtigt wird.

Vorteilhaft ist weiterhin die kompakte Gestaltung des Ventils, wobei Zu- und Abfluss des Ventils sowie das Verschlussorgan in direkter Strömungslinie des Mediums angeordnet sind

### Zeichnungen

Es zeigen
- Figur 1:: eine Draufsicht auf ein erfindungsgemäßes Rückschlagventil; teilweise im Schnitt,
- Figur 2:: eine Seitenansicht des Rückschlagventils gemäß Figur 1 ohne Führungselement, Dichtorgan und Rückstellfeder und
- Figur 3:: eine Draufsicht auf das in Figur 1 dargestellte Dichtorgan.

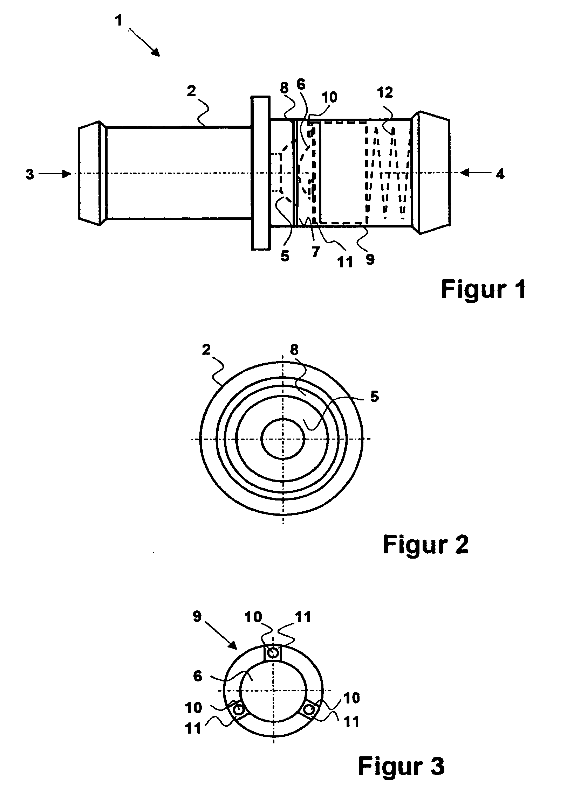

In den Figuren 1 und 2 ist ein erfindungsgemäßes Rückschlagventil 1 für ein unter Druck stehendes Medium dargestellt. Das Rückschlagventil 1 besteht aus einem Gehäuse 2 mit einem Einlass 3 und einem Auslass 4. Einlassseitig ist ein Dichtsitz 5 für ein diesen abschließendes und unter dem Mediumdruck in eine Öffnungsstellung bewegbares Dichtorgan 6 angeordnet. Um das Dichtorgan 6 in dem Dichtsitz 5 gegen einen begrenzten Öffnungsdruck zu halten, ist einerseits zwischen der Innenfläche 7 des Gehäuses 2 und dem Dichtsitz 5 ein magnetisierbares Element 8, beispielsweise eine Metallscheibe, angeordnet. Andererseits umfasst ein hülsenartiges Führungselement 9, an dem das Dichtorgan 6 angeordnet ist, drei Magnete 10. Wie in Figur 3 dargestellt, befinden sich die Magnete 10 jeweils auf einem der drei Stege 11 des Führungselementes 9, wobei das Dichtorgan 6 ebenfalls auf den Stegen 11 angeordnet ist. Die Anordnung der Magnete 10 auf dem Führungselement 9 wurde derart gewählt, dass der Mediumfluss nicht beeinträchtigt wird.

Bei Überschreiten des begrenzten Öffnungsdruckes wird das Dichtorgan 6 gegen eine am Gehäuse abgestützte Rückstellfeder 12 gedrückt. In der Öffnungsstellung wird das Führungselement 9 von dem Medium durchströmt.

Beim Öffnen des Rückschlagventils 1 ist die von den Magneten 10 und dem magnetisierbaren Element 8 erzeugte Magnetkraft größer im Vergleich zu der von der Rückstellfeder 12 erzeugten Federkraft. Nach dem Überwinden des durch das Medium erzeugten Öffnungsdruckes nimmt die Magnetkraft mit zunehmender Entfernung der Magneten 10 zu dem magnetisierbaren Element 8 ab.

Beim Schließen des Rückschlagventils 1 wirkt anfangs nur die von der Rückstellfeder 12 erzeugte Federkraft. Mit geringer werdender Entfernung zwischen den Magneten 10 und dem magnetisierbaren Element 8 wird die Magnetkraft größer im Vergleich zu der Federkraft.

Durch die Magnetkraft wird das Rückschlagventil 1 bei niedrigen Drücken geschlossen gehalten. Wird das Rückschlagventil 1 bei höheren Drücken geöffnet, so ist als Gegenkraft nur die von der schwachen Rückstellfeder 12 erzeugte Federkraft zu überwinden. Somit weist das Rückschlagventil 1 bei höheren Medienströmen einen niedrigeren Druckverlust im Vergleich zu einer Ausführung ohne die Magnete 10 und das magnetisierbaren Element 8 auf, da ohne Magnete 10 und magnetisierbares Element 8 die Rückstellfeder 12 eine höhere Federkraft erzeugen muss um die gleiche Verschlusskraft aufzubringen.

### Bezugszeichenliste

- 1: Rückschlagventil
- 2: Gehäuse
- 3: Einlass
- 4: Auslass
- 5: Dichtsitz
- 6: Dichtorgan
- 7: Innenfläche
- 8: magnetisierbares Element
- 9: Führungselement
- 10: Magnet
- 11: Steg
- 12: Rückstellfeder

## Patentansprüche

1. Rückschlagventil (1) für ein Medium mit einem Dichtsitz (5), mit welchem ein Dichtorgan (6) zusammenwirkt, wobei ein magnetisierbares Element (8) in Höhe des Dichtsitzes (5) und beabstandet vom Dichtsitz (5) angeordnet ist, und das Dichtorgan (6) an einem Führungselement (9) angeordnet ist, und an dem Führungselement (9) beabstandet von dem Dichtorgan (6) mindestens ein Magnet (10) angeordnet ist, **dadurch gekennzeichnet, dass** das magnetisierbare Element (8) zwischen einer Innenfläche (7) eines Gehäuses (2) des Rückschlagventils (1) und dem Dichtsitz (5) angeordnet ist, und der Magnet (10) an einem Steg (11) des Führungselements (9) angeordnet ist.

2. Rückschlagventil (1) nach Anspruch 1, **dadurch gekennzeichnet, dass** das magnetisierbare Element (8) gegenüber dem Medium abgekapselt ist.

3. Rückschlagventil (1) nach Anspruch 1 oder 2, **dadurch gekennzeichnet, dass** der Magnet (10) gegenüber dem Medium abgekapselt ist.

## Claims

1. Non-return valve (1) for a medium, with a sealing seat (5) with which a sealing member (6) interacts, wherein a magnetisable element (8) is arranged level with the sealing seat (5) and at a distance from the sealing seat (5), and the sealing member (6) is arranged on a guide element (9), and at least one magnet (10) is arranged at a distance from the sealing member (6) on the guide element (9), **characterized in that** the magnetisable element (8) is arranged between an inner surface (7) of a housing (2) of the non-return valve (1) and the sealing seat (5), and the magnet (10) is arranged on a web (11) of the guide element (9).

2. Non-return valve (1) according to Claim 1, **characterized in that** the magnetisable element (8) is encapsulated in relation to the medium.

3. Non-return valve (1) according to Claim 1 or 2, **characterized in that** the magnet (10) is encapsulated in relation to the medium.

## Revendications

1. Clapet anti-retour (1) pour un fluide muni d'un siège d'étanchéité (5) avec lequel interagit un organe d'étanchéité (6), un élément magnétisable (8) étant disposé à hauteur du siège d'étanchéité (5) et espacé du siège d'étanchéité (5) et l'organe d'étanchéité (6) étant disposé sur un élément de guidage (9) et au moins un aimant (10) espacé de l'organe d'étanchéité (6) étant disposé sur l'élément de guidage (9),
**caractérisé en ce que**
l'élément magnétisable (8) est disposé entre une surface intérieure (7) d'un boîtier (2) du clapet anti-retour (1) et le siège d'étanchéité (5) et l'aimant (10) est disposé sur un montant (11) de l'élément de guidage (9).

2. Clapet anti-retour (1) selon la revendication 1,
**caractérisé en ce que**
l'élément magnétisable (8) est encapsulé par rapport au fluide.

3. Clapet anti-retour (1) selon la revendication 1 ou 2,
**caractérisé en ce que**
l'aimant (10) est encapsulé par rapport au fluide.
